Europäisches Patentamt

European Patent Office

Office européen des brevets

(11) Veröffentlichungsnummer: **0 108 989**
**A2**

# EUROPÄISCHE PATENTANMELDUNG

(21) Anmeldenummer: 83110858.4

(22) Anmeldetag: 29.10.83

(51) Int. Cl.³: **H 04 B 9/00**

(30) Priorität: **12.11.82 DE 3241942**

(43) Veröffentlichungstag der Anmeldung: **23.05.84**
**Patentblatt 84/21**

(84) Benannte Vertragsstaaten: **AT CH DE FR GB IT LI NL SE**

(71) Anmelder: **Richard Hirschmann Radiotechnisches Werk,**
**Richard-Hirschmann-Strasse 19, D-7300 Esslingen a.N.**
**(DE)**

(72) Erfinder: **Ludolf, Wilhelm, Dr.-Ing.,**
**Wilhelm-Röntgen-Strasse 40, D-7302 Ostfildern 1 (DE)**
Erfinder: **Schenkyr, Rainer, Dipl.-Ing., Meisenweg 16,**
**D-7050 Waiblingen (DE)**
Erfinder: **Sommer, Rolf-Dieter, Dipl.-Ing.,**
**Lonseerstrasse 9, D-7000 Stuttgart 61 (DE)**

(74) Vertreter: **Stadler, Heinz, Dipl.-Ing., Richard Hirschmann**
**Radiotechnisches Werk**
**Richard-Hirschmann-Strasse 19, D-7300 Esslingen a.N.**
**(DE)**

(54) **Einrichtung zur optischen Informationsübertragung zwischen mehreren Teilnehmern.**

(57) Bei einer Einrichtung zur optischen Informationsübertragung zwischen mehreren Teilnehmern erfolgt die Verzweigung der Datenwege über Koppelelemente.

Zum Zwecke eines möglichst einfachen, kostengünstigen und dämpfungsarmen Aufbaus, sowie der Schaffung einer Möglichkeit zur Signalregeneration sind diese Koppelelemente als Hybridkoppler (1, 27, 28, 37) ausgebildet, bei denen durch jeweils einen eingangsseitigen D/E-Wandler (4, 5, 23, 24, 30, 34, 38, 41) und einen ausgangsseitigen E/O-Wandler (6, 7, 25, 26, 29, 35, 39, 40) jeweils eine elektrische Ebene gebildet ist, in der die Verzweigung der Datenwege zur Aufteilung bzw. Zusammenführung der Informationen erfolgt.

Bidirektional mit jeweils zwei optischen Ein- und Ausgängen ($E_1$, $E_2$, $A_1$, $A_2$) und einem einzigen Anschluß für den elektrischen Ein- und Ausgang ($T_E$, $T_A$) ausgeführte Hybridkoppler (1, 27, 28, 37) dieser Art eignen sich besonders gut zum Aufbau beliebiger Sternbus-Konfigurationen durch Zusammenschaltung in der elektrischen Ebene.

Mit der unidirektionalen Ausführung der Hybridkoppler sind auch Ringbus-Systeme sehr günstig herzustellen, wobei mit geringem Aufwand Mehrfachdurchläufe der Datensignale auf dem Datenring vermeidbar sind und eine taktsynchrone Übertragung auch bei zentraler Taktversorgung ermöglicht ist.

ACTORUM AG

Richard Hirschmann
Radiotechnisches Werk
Richard-Hirschmann-Str. 19
7300 Esslingen a.N.

11.11.82
TPA/Stad/El

Patentanmeldung

**Einrichtung zur optischen Informationsübertragung zwischen mehreren Teilnehmern**

Die Erfindung betrifft eine Einrichtung zur optischen Informationsübertragung zwischen mehreren Teilnehmern über Koppelelemente zum Verzweigen der Datenwege, insbesondere einen optischen Datenbus.

Derartige, z.B. aus dem Aufsatz "Optische Verzweigungsglieder für Datenbus-Systeme mit Lichtleitfasern" von Weidel et al, Elektronik Praxis, Bd. 11, 1979, S. 34 f. und dem Buch "Optische Informationsübertragung mit Lichtwellenleitern" von Rosenberger et al, Bd. 96 der Reihe Kontakt & Studium Elektrotechnik, VDE-Verlag, Kap. 8, bekannte Einrichtungen eignen sich für einen universellen Einsatz in Anlagen, bei denen unterschiedlichste Geräte (z.B. Mess-, Steuer-, EDV-Geräte und Maschinen) über Normschnittstellen miteinander verbunden sind und die Vorteile der optischen Übertragungstechnik, wie Unempfindlichkeit gegenüber elektromagnetischer Störstrahlung, Explosionssicherheit, Abhörfestigkeit und große Bandbreite, relevant sind.

In all diesen bekannten Einrichtungen erfolgt die Verteilung der Signale mittels passiver, also rein optischer Koppelelemente. Diese Koppler sind wegen der erforderlichen mechanischen Präzision aufwendig und teuer aufgebaut. Außerdem weisen sie eine hohe Dämpfung des optischen Signals auf, sodaß für eine einwandfreie Signalübertragung entweder lediglich geringe Entfernungen zwischen den Koppelstellen möglich oder hohe Lichtleistungen und, z.B. beim Einsatz in Linien- oder Ringbus-Systemen, ein großer Dynamikbereich der Empfangselektronik erforderlich sind. Darüber hinaus ist eine Signalaufbereitung und regenerative Impulsformung in diesen bekannten Kopplern nicht möglich.

Durch die Erfindung ist die Aufgabe gelöst, eine Einrichtung der eingangs genannten Art so auszubilden, daß unter Beibehaltung der genannten Vorteile die Koppler möglichst einfach, kosten - günstig und dämpfungsarm aufgebaut sind und eine Möglichkeit zur Regeneration des digitalen Signals bieten.

Diese Aufgabe ist dadurch gelöst, daß die Koppelelemente als Hybridkoppler ausgebildet sind, bei denen durch jeweils einen eingangsseitigen O/E-Wandler und einen ausgangsseitigen E/O-Wandler jeweils eine elektrische Ebene gebildet ist, in der die Verzweigung der Datenwege zur Aufteilung bzw. Zusammenführung der Informationen erfolgt.

Diese Verzweigung in der elektrischen Ebene ist einfach und problemlos realisierbar, wobei für eine einwandfreie Funktion lediglich eine ausreichende Entkopplung zwischen den jeweiligen Ausgängen von Empfänger und Teilnehmer, z.B. durch Verstärker oder logische Gatter vorzusehen ist.

In der elektrischen Ebene ist eine Signalaufbereitung ohne weiteres, z.B. durch einen Verstärker und einen Schmitt-Trigger möglich. Zweckmäßigerweise sind diese Bausteine im Empfangswandler integriert, da sie hier nur einfach, bei Regenerierung nach der Verzweigung jedoch doppelt (in der Teilnehmer- und der Busleitung) benötigt würden. Überdies ist der Verstärker im Empfänger normalerweise ohnehin vorhanden.

Durch die Erfindung sind einfach aufgebaute, preisgünstige Kopp-

0108989

ler geringer Dämpfung geschaffen, deren Einsatz z.B. in einem optischen Datenbus eine optimale Leistungsbilanz des ganzen Systems ergibt. Dadurch sind ohne Mehraufwand gegenüber dem Einsatz passiver Koppler größere Reichweiten möglich und die Anforderungen an den Dynamikbereich in T-Bus-Systemen wesentlich vermindert.

Für die einwandfreie Funktion der Einrichtung ist es nötig, den Takt der von den Sendern abgeschickten Datensignale am jeweiligen Empfänger zur Verfügung zu haben, damit die ankommende digitale Information im richtigen Zeitpunkt auf ihren Zustand abfragbar ist. Bei dezentraler Taktversorgung wird dazu der Takt in der Teilnehmerschaltung entweder vom einlaufenden Datensignal abgeleitet oder davon unabhängig erzeugt und in eine gesonderte Taktleitung eingespeist. Bei zentraler Taktversorgung wird das Taktsignal von einem Taktgenerator zentral erzeugt und z.B. bei einem optischen Datenbus auf einer optischen Taktleitung mit übertragen. Im Gegensatz zur bekannten Anwendung passiver Koppler ist ein zentraler Takt bei der erfindungsgemäßen Einrichtung auch für bidirektionale Signalübertragung z.B. in Linear- und Sternbus-Systemen möglich.

Grundsätzlich sind die Hybridkoppler uni- oder bidirektional ausführbar, wobei gemäß den Ansprüchen 2 und 3 in beiden Fällen nur jeweils ein elektrischer Ein- und Ausgang vorgesehen ist; während der unidirektionale Hybridkoppler nur einen optischen Ein- und Ausgang aufweist, besitzt der bidirektionale zwei Ein- und Ausgänge für die beiden den zwei Signalrichtungen zuge - ordneten optischen Leiter. Mit der zuletzt genannten Ausführungsform sind in Linearbussen alle Teilnehmer auch von nicht am Busende angeordneten Sendern erreichbar. Bei Ringbussystemen genügt dafür eine unidirektionale Signalübertragung.

Die Teilnehmeranschlüsse müssen nicht in der elektrischen Ebene erfolgen. Sie können vielmehr auf einfache Weise durch Zusammenschaltung zweier Hybridkoppler nach Anspruch 4 auch in der optischen Ebene liegen. Der Einsatz eines derartigen Koppelelements kann z.B. dann vorteilhaft sein, wenn ein weit abliegender Teilnehmer nicht direkt, sondern günstiger mittels einer Stichleitung an die Busleitung angeschlossen ist. Vor allem aber ist damit ein universell verwendbarer Koppler-Baustein gebildet, der sich ebenso zur Verbindung zweier linearer Busse eignet, wie zum Anschluß zweier, bzw. bei Einschaltung am Busende dreier Teilnehmer an einen bidirektionalen Bus oder als Sternkoppler zum Anschluß von vier Teilnehmern.

Anstatt bei Hybridkopplern je einen elektrischen Anschluß für den Teilnehmer- Ein- und -Ausgang zu verwenden, kann dafür gemäß Anspruch 5 auch ein einziger elektrischer Anschluß vorgesehen sein. Ein derartiger Koppler, bei dem jedes eingespeiste optische oder elektrische Signal an allen optischen und elektrischen Ausgängen erscheint, ist für den Aufbau einer inneren elektrischen Bus — struktur und damit nach Anspruch 6 eines hybriden Sternkopplers geeignet. Mit einem solchen Bauteil lassen sich optische Sternbus-Systeme aufbauen, in denen jedes einzelne Koppelelement eines Sternkopplers mindestens ein optisches Anschlußpaar zum Anschluß jeweils wenigstens eines Teilnehmers aufweist.
Bei derartigen Einrichtungen ist die erforderliche bzw. empfangene Leistung in vorteilhafterweise unabhängig von der Anzahl der Teilnehmer und von der Entfernung des sendenden Teilnehmers vom Sternkoppler; sie hängt vielmehr lediglich von der Länge der Über — tragungsstrecke zwischen Sternkoppler und Teilnehmer ab, sodaß von der Empfangselektronik der Teilnehmer nur eine geringe Dynamik verlangt wird. Darüber hinaus ist dieses Bussystem ohne großen Aufwand beliebig erweiterbar und damit sehr einfach den speziellen Gegebenheiten des Einzelfalls anzupassen.

Ringbus-Systeme zeichnen sich grundsätzlich durch einen kosten — günstigen Aufbau aus, weil aufgrund der unidirektionalen Über — tragung die Koppler sehr einfach sind und die Länge des Daten — busses gering ist. Allerdings würden bei Ihnen ohne besondere Maß-nahmen unschädliche Mehrfachdurchläufe jedes gesendeten Signals erfolgen. Diese Maßnahmen sind bei der Verwendung der bekannten

0108989

passiven Koppler derart aufwendig, daß sie aus wirtschaftlichen Gründen nicht vertretbar sind. Aus diesem Grunde hat man in der Praxis seither unter Verzicht auf die angeführten Vorteile der Ringbusse die aufwendigeren Linearbusse eingesetzt. Bei der erfindungsgemäßen Einrichtung ist die Vermeidung von Mehrfach — durchläufen dagegen durch die in Anspruch 7 angegebene einfache elektrische Schaltung für zwei Alternativen ohne weiteres möglich: Entweder ist der Schalter beim sprechenden Teilnehmer solange geöffnet bis die gesendete Information nach Durchlaufen des Datenringes vollständig beim sprechenden Partner einge — troffen ist oder er ist lediglich zur Verhinderung eines Mehrfachdurchlaufs der eigenen Information geöffnet, bei Eintreffen der Information eines anderen Teilnehmers jedoch geschlossen.

Die zuletzt genannte Variante erlaubt eine effektivere Auslastung des Ringbusses. Allerdings ist dazu ein Verzögerungsglied nötig, dessen Verzögerungszeit größer ist als diejenige, die zur Auswertung, d.h. zur Erkennung des Signals erforderlich ist.

Diese Auswertung geschieht durch einen Vergleich von gesendetem und empfangenem Signal in einer Vergleichsschaltung. Bei einer vorteilhaften Ausgestaltung der Erfindung gemäß Anspruch 8 dient diese zugleich zur Erkennung von Übertragungsfehlern (Bitfehler). Im Fehlerfall wird das Sendesignal zur Gewährleistung einer sicheren Informationsübertragung erneut in den Datenbus einge — speist.

Durch eine Ausführung der erfindungsgemäßen Einrichtung nach Anspruch 9 ist eine taktsynchrone serielle Datenübertragung er — möglicht. Für den Anschluß der Taktleitung weist der Hybrid — koppler einen weiteren optischen Ein- und Ausgang auf. Bei zentraler Taktversorgung wird das Datensignal von dem ebenfalls in der elektrischen Ebene ausgekoppelten Taktsignal im Hybridkoppler synchronisiert. Bei dezentraler Taktversorgung erfolgt die Erzeugung des Taktsignals und die Synchronisierung des Datensignals in der Teilnehmerschaltung, das Taktsignal wird hier zusätzlich in die Taktleitung eingespeist. Um im Falle eines Ringbus-Systems einen Mehrfachdurchlauf des dezentral erzeugten Taktsignals auf der als Taktring ausgeführten Taktleitung wirksam zu vermeiden, ist auch in diesem ein mit dem Unterbrecher der Datenleitung synchron schaltender Unterbrecher vorzusehen.

In einem Ringbus-System mit zentraler Taktversorgung ist das Ausgangssignal des Taktgenerators wegen der beliebigen Länge des Ringbusses in der Regel nicht mit dem Datensignal an dieser Stelle phasengleich, sodaß hier eine weitere Synchronisierung notwendig ist. In Anspruch 10 ist hierfür eine einfache und zweckmäßige Ausbildung des erfindungsgemäßen Hybridkopplers ohne Teilnehmeranschluß angegeben, in dem das vom Taktgenerator gelieferte Signal in der elektrischen Ebene zum einen in den Taktring und zum anderen in einen zwischen dem O/E- und dem E/O-Wandler der Datensignalleitung eingeschaltetes Synchronisierglied eingespeist wird. Diese Synchronisation ist mit den bekannten passiven Kopplern nicht möglich, sodaß durch die Erfindung ein weiteres Hindernis für die vorteilhafte Anwendung optischer Ringbusse aus dem Wege geräumt ist.

Die Figuren zeigen vier Ausführungsbeispiele des erfindungsgemäßen Hybridkopplers im Blockschaltbild und ihren Einsatz in zwei schematisch dargestellten optischen Datenbus-Systemen.

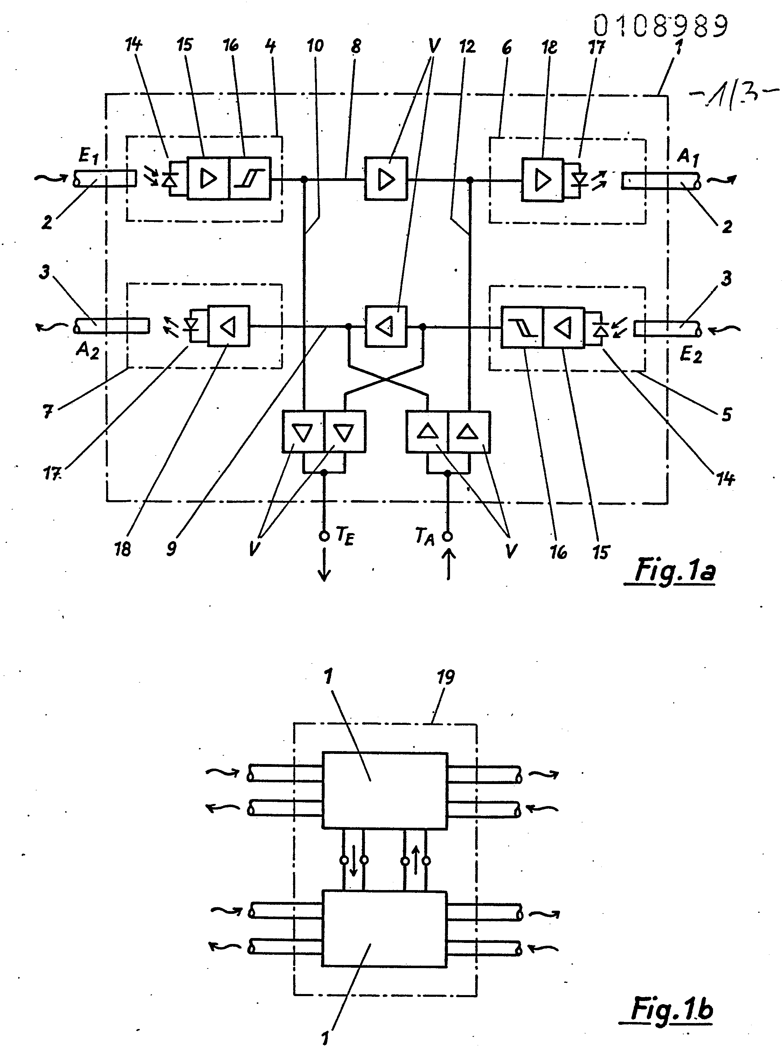

In Fig. 1 a ist ein bidirektionaler Hybridkoppler 1 für den Einsatz in einem linearen T-Bus-System mit je einer optischen Leitung 2, 3 für die beiden Richtungen dargestellt. Durch diesen Aufbau ist sichergestellt, daß die ausgesendeten Signale in jedem Falle alle Teilnehmer des Busses erreichen. Mit Hilfe je eines O/E-Wandlers 4, 5 an den beiden optischen Eingängen $E_1$, $E_2$ und jeweils eines E/O-Wandlers 6, 7 an den beiden optischen Ausgängen $A_1$, $A_2$ ist in dem Hybridkoppler 1 für jede Leitung 2, 3 eine elektrische Ebene 8, 9 gebildet, in der die Verzweigung der Datensignale zum Teilnehmer bzw. vom Teilnehmer über die beiden elektrischen Teilnehmer-Anschlüsse $T_E$ und $T_A$ erfolgt. Damit die richtige Signalflußrichtung gewährleistet ist, sind in den Leitungen der elektrischen Ebene 8,9, sowie den Verzweigungsleitungen 10, 11, 12, 13 Entkopplungsverstärker V eingeschaltet. In den O/E-Kopplern 4, 5 werden die Impulse des von den Fotodioden 14 gelieferten und in einem Verstärker 15 verstärkten elektrischen Signals mittels eines Schmitt-Triggers 16 sauber geformt. Dadurch ist eine ebenso einfache wie wirkungsvolle Signalregeneration durchgeführt, die in der optischen Ebene nicht möglich ist. In den E/O-Wandlern 6, 7 ist grundsätzlich kein Schmitt-Trigger, sondern allenfalls ein der jeweiligen Sendediode 17 vorgeschalteter Verstärker 18 not – wendig.

Soll im Einzelfall ein Hybridkoppler ausschließlich optische Anschlüsse aufweisen, so ist dies – wie in Fig. 1 b schematisch dargestellt – sehr einfach durch Zusammenschaltung zweier Hybridkoppler 1 in der elektrischen Ebene realisierbar, wo – durch in der bereits beschriebenen Weise ein vielseitig ver – wendbarer Kopplerbaustein geschaffen ist.

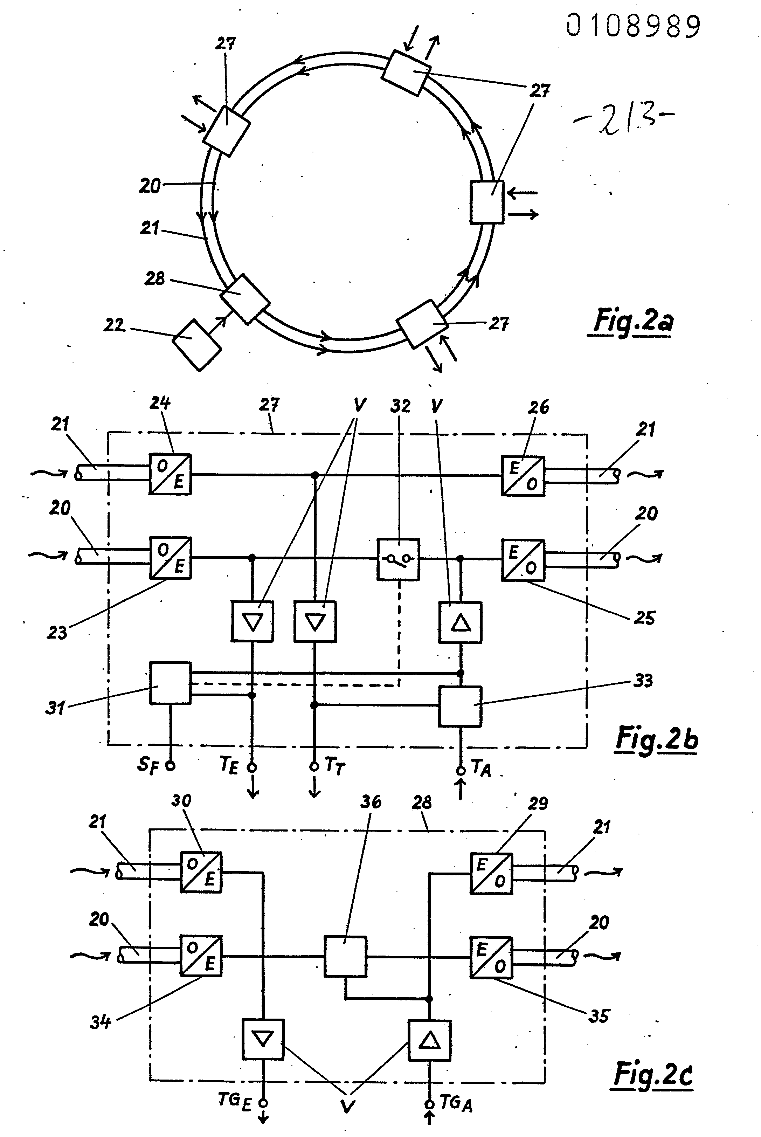

Fig. 2 a zeigt den grundsätzlichen Aufbau eines Ringbus-Systems mit zentraler Taktversorgung, bei dem je ein optischer Datenringbus 20 und ein optischer Taktring 21 für die Übertragung der Information bzw. des von einem zentralen Taktgenerator 22 er – zeugten Taktsignales vorgesehen sind. Der Anschluß der Teilnehmer an den Datenringbus 20 und den Taktring 21 folgt jeweils durch Verzweigung in deren mittels entsprechender O/E- bzw. E/O-Wandler 23, 24 bzw. 25, 26 gebildeten elektrischen Ebene eines in Fig. 2 b dargestellten unidirektionalen Hybridkopplers 27 über Entkopplungsverstärker V an den Takteingang $T_T$, sowie den Daten-Ein- und Ausgang $T_E$, $T_A$ der Teilnehmerschaltung. Der Taktgenerator 22 ist in einem speziellen nach Fig. 2 c ohne Teilnehmeranschluß aufgebauten Hybridkoppler 28 über die Klemmen $TG_E$, $TG_A$, die Verstärker V und die O/E- bzw. E/O-Wandler 29, 30 auf höchst einfache Weise an den Kontaktring 21 angeschlossen. Zur Vermeidung von Informations-Fehlübermittlungen bewirkenden Mehrfachdurchläufen des Datensignals ist in jedem Hybridkoppler 27 ein von einer Steuerlogik 31 gesteuerter Unterbrecher 32 vorgesehen, der den Datenringbus 20 so lange unterbricht, bis die vom sprechenden Teilnehmer gesendete Information nach Durchlaufen des Datenringbusses 20 wieder vollständig bei diesem eingetroffen ist. Die zur Signalerkennung nötige Schaltung zum Vergleich des gesendeten und empfangenen Datensignals ist in die Steuerlogik 31 integriert und an die elektrischen Ein- und Ausgangsleitungen angeschlossen.

Der Vergleicher liefert für den Fall, daß das gesendete Signal nicht mit dem empfangenen übereinstimmt, ein Fehlersignal, welches am Ausgang $S_F$ der Steuerlogik 31 zur weiteren Benutzung (z.B. als Anstoß zu einer erneuten Aussendung des fraglichen Datensignals) zur Verfügung steht.

Die notwendige Synchronisation des vom Teilnehmer ausgesendeten Datensignals durch das Taktsignal erfolgt durch ein von beiden Signalen angesteuertes Synchronisierglied 33 in der elektrischen Ausgangsleitung.

Wegen der beliebigen Länge des Ringbusses stimmen auch im Hybridkoppler 28 die Phasen von Daten- und Taktsignal praktisch nie überein, sodaß an dieser Stelle ebenfalls eine Synchronisierung durch eine zwischen den O/E- und den E/O-Wandler 34, 35 der Datenleitung eingefügte, vom Taktsignal angesteuerte Synchronisierschaltung 36 vorgesehen ist.

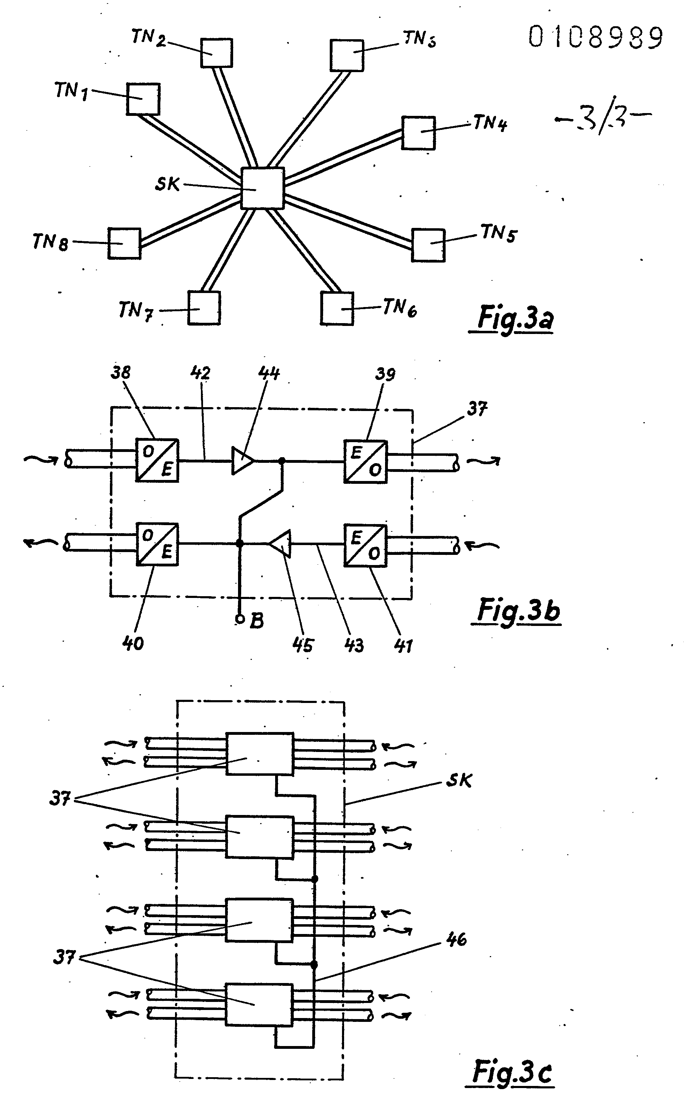

In Fig. 3 a ist als weiteres Ausführungsbeispiel einer erfindungsgemäßen Einrichtung das Prinzip einer Sternbus-Konfiguration dargestellt, bei dem alle Teilnehmer $TN_1$ bis $TN_8$ bidirektional, also über je zwei optische Leitungen an einen gemeinsamen Sternkoppler SK angeschlossen sind. Ein solcher Sternkoppler ist, wie in Fig. 3 c schematisch dargestellt, sehr einfach aus den erfindungsgemäßen in diesem Beispiel bidirektional ausgeführten Hybridkopplern 37 gemäß Fig. 3 b aufbaubar. Diese bestehen lediglich aus den für jede Leitung vorgesehenen O/E- und E/O-Wandler 38, 39 bzw. 40, 41, sowie jeweils einem in den beiden elektrischen Ebenen 42, 43 in Signalflußrichtung eingeschalteten Verstärker 44, 45, deren Ausgänge miteinander verbunden sind und den Anschluß B für eine interne elektrische Busleitung 46 des Stern - kopplers SK bilden. Insgesamt ist damit ein äußerst kosten –
günstiges Sternbus-System ermöglicht, das außerdem durch weitere Teilnehmer entweder über weitere oder im Zuge der vor –
handenen optischen Leitungen bzw. durch Anschluß weiterer
Busse zu beliebigen, jedem praktischen Anwendungsfall anpaßbaren Strukturen erweiterbar ist.

## Patentansprüche

1. Einrichtung zur optischen Informationsübertragung zwischen mehreren Teilnehmern über Koppelelemente zum Verzweigen der Datenwege, insbesondere optischer Datenbus, dadurch gekennzeichnet, daß die Koppelelemente als Hybridkoppler (1, 27, 28, 37) ausgebildet sind, bei denen durch jeweils einen eingangsseitigen O/E-Wandler (4, 5, 23, 24, 30, 34, 38, 41) und einen ausgangsseitigen E/O-Wandler (6, 7, 25, 26, 29, 35, 39, 40) jeweils eine elektrische Ebene gebildet ist, in der die Verzweigung der Datenwege zur Aufteilung bzw. Zusammenführung der Informationen erfolgt.

2. Einrichtung nach Anspruch 1, dadurch gekennzeichnet, daß die Hybridkoppler (27, 28) unidirektional mit jeweils einem optischen und einem elektrischen Ein- und Ausgang ($T_E$, $T_A$) ausgeführt sind.

3. Einrichtung nach Anspruch 1, dadurch gekennzeichnet, daß die Hybridkoppler (1, 37) bidirektional mit jeweils zwei optischen Ein- und Ausgängen ($E_1$, $E_2$, $A_1$, $A_2$) und mindestens einem elektrischen Ein- und Ausgang ($T_E$, $T_A$) ausgeführt sind.

4. Einrichtung nach Anspruch 2 oder 3, dadurch gekennzeichnet, daß jeweils zwei Hybridkoppler (1) in ihrer elektrischen Ebene zusammengeschaltet sind.

5. Einrichtung nach Anspruch 1, dadurch gekennzeichnet, daß die Hybridkoppler (37) jeweils wenigstens einen optischen Ein- und Ausgang und einen einzigen für Ein- und Ausgang gemeinsamen elektrischen Anschluß (B) aufweisen.

6. Einrichtung nach Anspruch 5, dadurch gekennzeichnet, daß wenigstens zwei Hybridkoppler (37) in der elektrischen Ebene zusammengeschaltet sind.

7. Einrichtung nach Anspruch 2, dadurch gekennzeichnet, daß jeder unidirektionale Hybridkoppler (27, 28) bei Verwendung in einem Ringbus-System einen in die Leitung zwischen dem O/E-Wandler (23) und dem E/O-Wandler (25) der Datensignalleitung eingeschalteten, gegebenenfalls mit einem Verzögerungsglied ausgestatteten Unterbrecher (32) aufweist, der mit Hilfe einer das Eingangssignal auswertenden Steuerlogik (31) den Mehrfachdurchlauf von Nachrichten verhindert.

8. Einrichtung nach Anspruch 7, dadurch gekennzeichnet, daß eine in der Steuerlogik (31) vorgesehene Schaltung zum Vergleich des Sende- und Empfangssignals zugleich zur Erkennung von Übertragungsfehlern genutzt ist.

9. Einrichtung nach einem der Ansprüche 1 bis 8, dadurch gekennzeichnet, daß die Hybridkoppler (27, 28) in einem zweiten bzw. weiteren Kanal (21) ein in jeden Teilnehmer ausgekoppeltes, zum Informationssignal synchrones Taktsignal übertragen.

10. Einrichtung nach Anspruch 9, dadurch gekennzeichnet, daß bei Verwendung der Hybridkoppler (27, 28) in einem Ringbus mit zentraler Taktversorgung das Ausgangssignal des Taktgenerators (22) das an dieser Stelle auf dem Ringbus vorhandenen Datensignal synchronisiert.

**_Fig.1a_**

**_Fig.1b_**

*Fig.2a*

*Fig.2b*

*Fig.2c*

0108989

−3/3−

Fig.3a

Fig.3b

Fig.3c